# EUROPÄISCHE PATENTSCHRIFT

(11) **EP 1 126 631 B1**
(45) Veröffentlichungstag und Bekanntmachung des Hinweises auf die Patenterteilung: **20.08.2003**
(21) Anmeldenummer: 01101770.4
(22) Anmeldetag: 26.01.2001
(51) Int. Cl.: H04B 7/08

(54) **Antennendiversity-Anlage mit phasengeregelter Summation von Antennensignalen**
Antenna diversity device with phase controlled summation of antenna signals
Système à diversité d'antennes avec sommation des signaux d' antennes contrôlés en phase

(30) Priorität: 17.02.2000 DE 10007301
(43) Veröffentlichungstag der Anmeldung: 22.08.2001
(73) Patentinhaber: FUBA Automotive GmbH & Co. KG, 31162 Bad Salzdetfurth (DE)
(72) Erfinder: Lindenmeier, Heinz, 82152 Planegg (DE); Hopf, Jochen, 85540 Haar (DE); Reiter, Leopold, 82205 Gilching (DE)

(56) Entgegenhaltungen:
- DE-A- 4 204 490
- DE-A- 19 607 045
- US-A- 4 079 318
- US-A- 5 539 781
- US-A- 6 009 307

## Beschreibung

Die Erfindung betrifft eine Antennendiversityanlage zum Empfang des frequenzmodulierten Rundfunks mit phasengeregelter Summation von Antennensignalen für Fahrzeuge mit einer Mehrantennenanlage mit mindestens zwei Antennenausgangssignalen und einer Empfangseinrichtung mit je einem Eingang für einen ersten und einen zweiten Empfangssignalpfad, von denen der zweite der beiden Empfangssignalpfade eine durch eine Phasenregeleinrichtung gesteuerte Phasendreheinrichtung enthält, an deren Ausgang das Empfangssignal die gleiche Phase besitzt wie im ersten Zweig und die beiden Empfangssignale in einem Summationsglied phasengleich summiert sind und das summierte Signal der Frequenzdemodulation zugeführt ist.

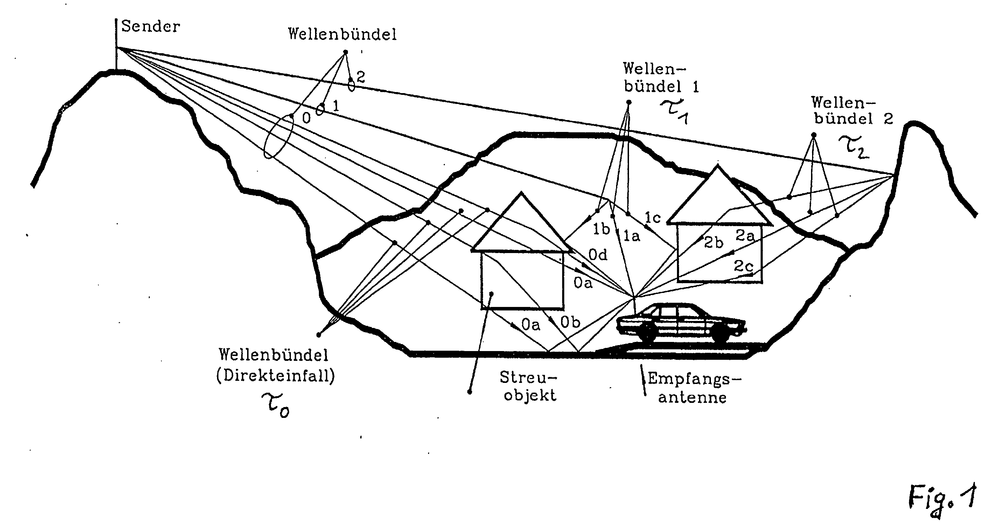

Antennendiversityanlagen dieser Art werden bevorzugt für den UKW-Rundfunkempfang eingesetzt und sind seit langem bekannt, z.B. aus der US4079318 sowie aus dem US-Patent 5,517,696. Diese Diversitysysteme zielen darauf ab, durch gleichphasige Überlagerung zweier oder auch mehrerer Antennensignale ein größeres Nutzsignal zu erzielen als mit einer Einzelantenne, um so im Gebiet mit Mehrwegeausbreitung die Wahrscheinlichkeit von Pegeleinbrüchen zu reduzieren. Damit ergibt sich im Summensignal ein in Bezug auf das Empfängerrauschen im Mittel günstigeres Signalrauschverhältnis. Die einwandfreie Wirkungsweise einer derartigen Antennendiversityanlage ist jedoch darauf beschränkt, dass die am Empfangsort sich überlagernden Teilwellen (Rayleigh-Empfangsfeld) sich in ihrer Momentanfrequenz nur unwesentlich unterscheiden, so dass sich daraus keine hörbaren Empfangsstörungen ergeben. In Empfangssituationen, wie sie z.B. in Fig. 1 dargestellt sind, bei denen sich Wellenbündel mit unterschiedlichen Laufzeiten τ₀ bis τ₃ am Empfangsort überlagern, sind die empfangenen Teilwellen nicht mehr gleichfrequent und führen durch die Überlagerung zu Frequenzstörhüben, die nach der Frequenzdemodulation während der Fahrt häufig zu spontan auftretenden Störgeräuschen führen. Die Wellenbündel mit den unterschiedlichen Laufzeiten überlagern sich am Empfangsort jeweils nach Maßgabe einer Rayleigh-Verteilung, welche sich bei den unterschiedlichen Antennen am Fahrzeug unterschiedlich auswirkt, so dass auch die Antennensignale zweier Diversityantennen am Fahrzeug insbesondere im Bereich des Pegelfadings unterschiedliche Momentanfrequenz besitzen können. Die Differenz dieser Frequenzen ist durch die Frequenzmodulation des hochfrequenten Trägers bedingt und ist in der Regel sehr groß und der daraus resultierende Phasenunterschied müsste von dem Phasendrehglied im zweiten Signalpfad ausgeregelt werden, wenn das Signal im ersten Signalpfad keinen Frequenzstörhub besitzt. Andererseits würde bei schneller Phasenregelung ein auf dem ersten Signalpfad gestörtes Signal durch den Regelvorgang seine Störung auf den zweiten Signalpfad aufprägen und somit die Störung im Summensignal erzwingen. Ein weiterer Nachteil dieses Systems ist die Begrenzung auf zwei Antennensignale, so dass keine ausreichende diversitätsmäßige Wirkung mit diesem System zu erzielen ist. Auf ähnliche Weise wirken Nachbarkanalstörungen aufgrund einer begrenzten Selektion in der Zwischenfrequenzebene. Auch durch Intermodulation anderer UKW-Sender im Empfangskanal auftretende Signale bewirken in Verbindung mit Pegeleinbrüchen Frequenzhubstörungen auf dem Nutzsignal, welche mit dem Phasenregelsystem nicht eliminiert werden können.

Aufgabe der Erfindung ist es deshalb bei einer Antennendiversityanlage nach dem Oberbegriff des Anspruchs 1, diese Nachteile zu vermeiden, kostengünstig die Anzahl der wirksamen Antennensignale zu erhöhen und dadurch die Diversity-Effizienz zu verbessern.

Diese Aufgabe wird erfindungsgemäß durch den kennzeichnenden Teil des Anspruchs 1 gelöst.

Ein besonders wichtiger Vorteil, der mit der Erfindung einhergeht, ist die Einsetzbarkeit einer Vielzahl von Antennen bzw. Antennensignalen bei der auf zwei begrenzten Anzahl von phasengesteuerten Signalpfaden. Dadurch wird die Wahrscheinlichkeit für das Auftreten gestörter Empfangssignale drastisch reduziert. Das Ausmaß der mit der Erfindung erreichbaren Signalverbesserung wird weiter unten anhand eines Beispiel näher erläutert. Der notwendige technische Aufwand bleibt dabei äußerst gering, da er sich auf elektronische Umschaltmaßnahmen und intelligente Elektronikschaltungen beschränkt, welche infolge der hochintegrierten Schaltungen preiswert eingesetzt werden können. Vorteilhafterweise kann diese Leistungssteigerung des Systems ohne zusätzliche äußerst aufwendige Frequenzumsetzer und Phasenregelkreise erreicht werden. Darüber hinaus lassen sich mehrere Phasenregelkreise hinsichtlich ihrer Regeleigenschaften nur schwer beherrschen und komplizieren das System zusätzlich. Selbst für den Fall, dass zumindest ein Antennensignal unter den verfügbaren ungestört ist wird der Störungsdetektor 18 in der vorliegenden Erfindung solange Störungserkennungssignale 38 nach jedem Umschaltvorgang abgeben, bis an beiden Eingängen 31 und 32 dasselbe und einzige ungestörte Empfangssignal vorliegt, welches in der Empfangseinrichtung 4 zu einem ungestörten summierten Signal 37 führt.

Im folgenden wird die Erfindung anhand der Figuren beschrieben. Es zeigen:
Fig. 1: Empfangssituation in einem durch Mehrwegeausbreitung gestörten Wellenfeld.

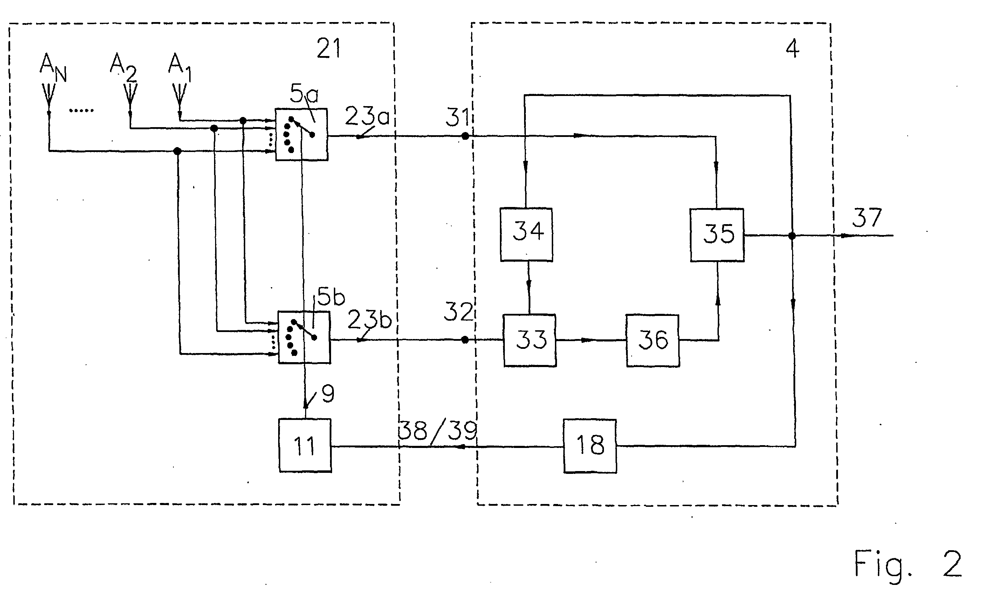

Fig. 2: Antennendiversityanlage nach der Erfindung mit einer Antennenanlage mit Schalteinrichtung 21, einer Empfangseinrichtung 4 mit dem Signalpfad 1 31 und Signalpfad 2 32 und einer Schalteinrichtung 11, welche alle Empfangssignale 23 gleichzeitig für beide Signalpfade 31,32 zur Verfügung stellen kann. In der Empfangseinrichtung 4 befindet sich ein Phasenregelkreis, bestehend aus einem Phasenregler mit Tiefpaß-Charakter 34 und einem Phasendrehglied 33 zur gleichphasigen Summation der Signale im Summationsglied 35. Das summiertes Ausgangssignal 37 ist neben dem FM-Empfänger 1 zum einen dem Phasenregler mit Tiefpaß-Charakter 34 zur Phasenregelung und zum anderen einem Störungsdetektor 18 zur schnellen Störerkennung zugeleitet, so dass mit dem Störerkennungssignal 38 über Schalteinrichtung 11 mindestens einem der beiden Signalpfade 31,32 ein anderes Empfangssignal 23 zugewiesen wird.

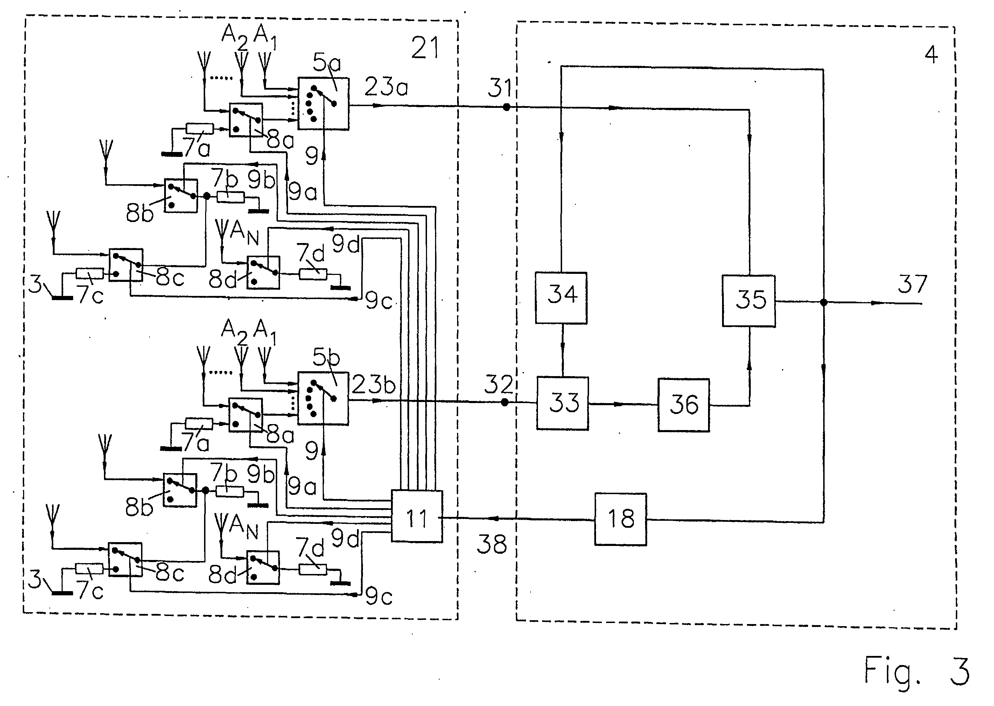

Fig. 3: Anordnung wie in Fig. 2, jedoch mit komplexer Antennenanlage mit Schalteinrichtung 21 zur Erzeugung zusätzlicher unterschiedlicher Antennensignale durch mit Schaltern 8 wechselweise über Auswahlschalter 5 angeschaltete, beispielsweis einseitig mit der Masse 3 verbundene Blindwiderstände 7.

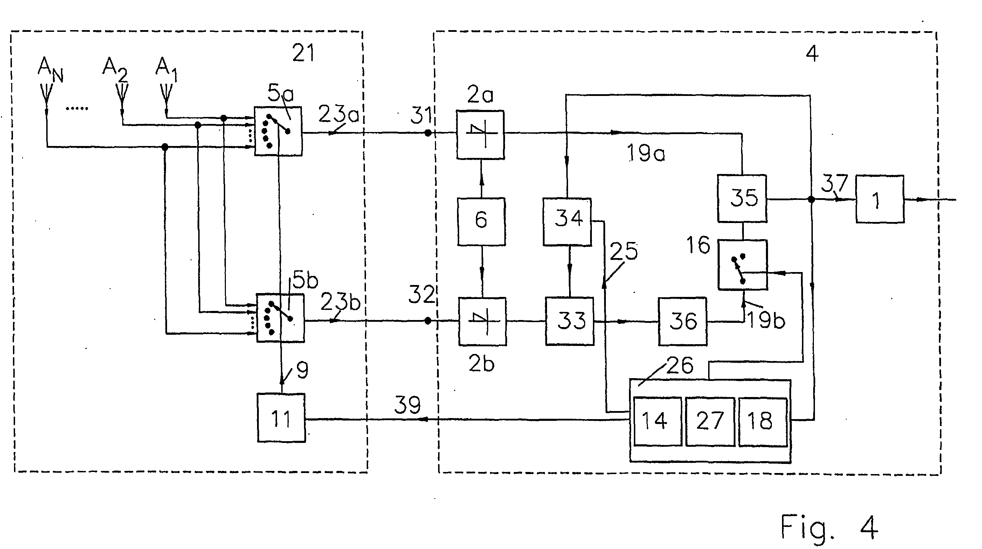

Fig. 4: Anordnung wie in Fig. 2 mit Signalsummation im Zwischenfrequenzbereich nach den vom gemeinsamen Oszillator 6 angesteuerten Mischern 2 der Empfangseinrichtung 4 mit einem Signalbewertungsprozessor 26, in welchem ein Störungsdetektor 18, ein Zeitglied 27 zur Feststellung der Zeitabstände zwischen auftretenden Störungen und eine Logikschaltung 14 zur Ansteuerung der Schalteinrichtung 11 und zur Umschaltung vom Phasen-Modus auf den Scanning-Modus enthalten sind. Die Umschaltung erfolgt durch Auftrennung eines der beiden Signalpfad mit dem Signalpfadschalter 16 und Stillegung des Phasenreglers mit Tiefpaß -Charakter 34 durch das Phasenstellsignal 25 bei zu großer Störhäufigkeit im summierten Ausgangssignal 37. Bei hinreichend geringer Störhäufigkeit im Ausgangssignal 37 im Scanning-Modus schaltet das System zurück in den Phasen-Modus.

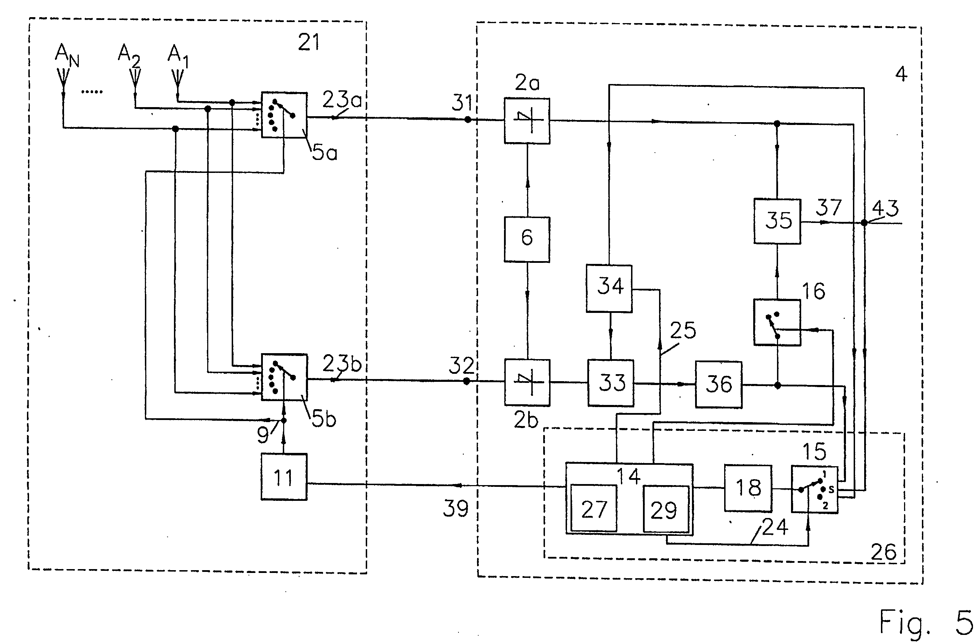

Fig. 5: Anordnung wie in Fig. 4, jedoch mit einem durch das Taktsignal 24 getakteten Signalpfadselektor 15 zur getrennten Prüfung sowohl der Signale in den beiden Signalpfaden 31,32 als auch des summierten Ausgangssignals 37 am Ausgang des Summationsglieds 35. Im Phasen-Modus wird mit Hilfe der Logikschaltung 14 bei zu großer Störhäufigkeit im summierten Ausgangssignal 37 auf den Scanning-Modus umgeschaltet und im Signalpfad 31 ein Empfangssignal 23a mit hoher Priorität aus einer Prioritätsliste angeschaltet. Letztere wird im Signalpfad 2 durch sequentielles Anschalten und Prüfen der Störhäufigkeit abgelegt aller verfügbarer Empfangssignal 23b in der Logikschaltung 14 abgelegt und laufend aktualisiert. Bei der Umschaltung in den Phasen-Modus werden zunächst die beiden besten aller verfügbaren Empfangssignale 23 gemäß der Prioritätsliste den Signalpfaden 31,32 zugewiesen; bei weiteren Störungen im summierten Ausgangssignal 37 wird stets das schlechtere der beiden Empfangssignale 23 durch ein anderes ersetzt.

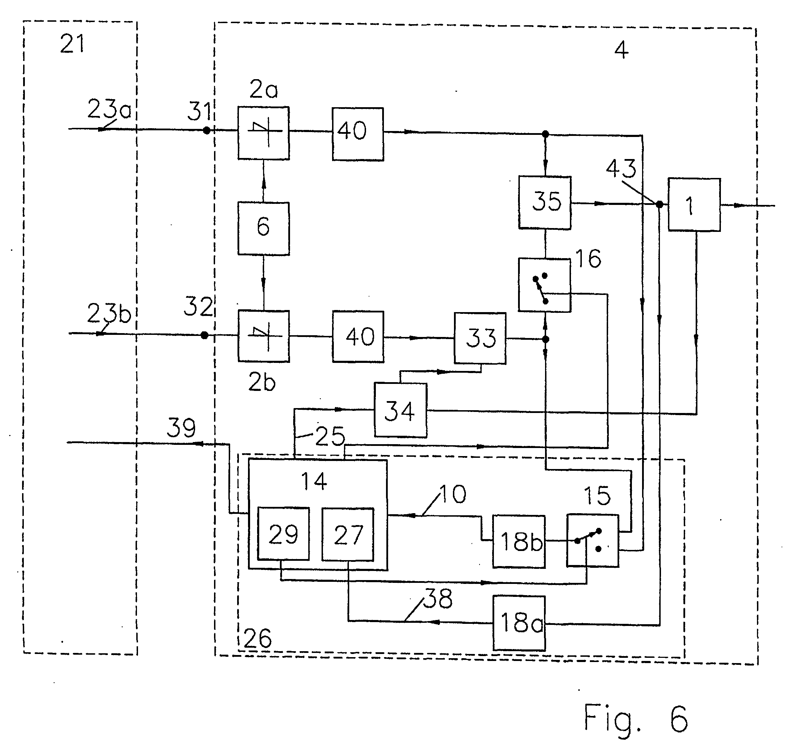

Fig. 6: Anordnung wie in Fig. 5, jedoch mit einem Störungsdetektor mit besserer Auflösung 18b und treffsicherer Reihung der Empfangssignale 23b in der Prioritätenliste und einem Störungsdetektor mit extrem schneller Anzeige 18a zur Vermeidung zu langer Prüfzeiten im Summensignalpfad 43 und der damit verbundenen hörbaren Störung.

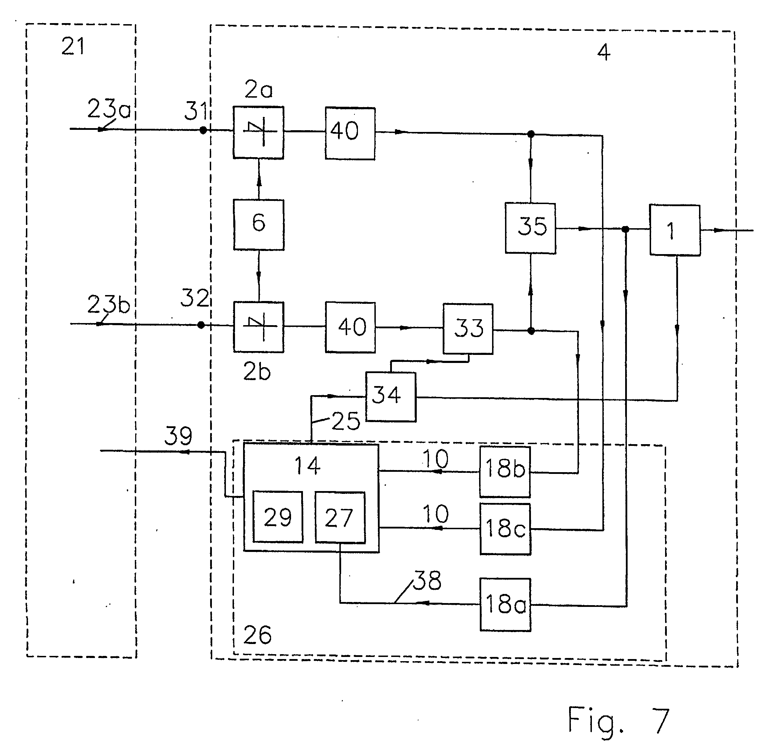

Fig. 7: Anordnung wie in Fig. 6, jedoch mit zwei getrennten Störungsdetektoren mit besserer Auflösung 18b,c zum Zwecke der permanenten Verfügbarkeit des Störungsanzeigesignals 10 zur Verbesserung der Prioritätenliste im Scanning-Modus und zur verbesserten Anzeige des besseren Signals im Phasen-Modus.

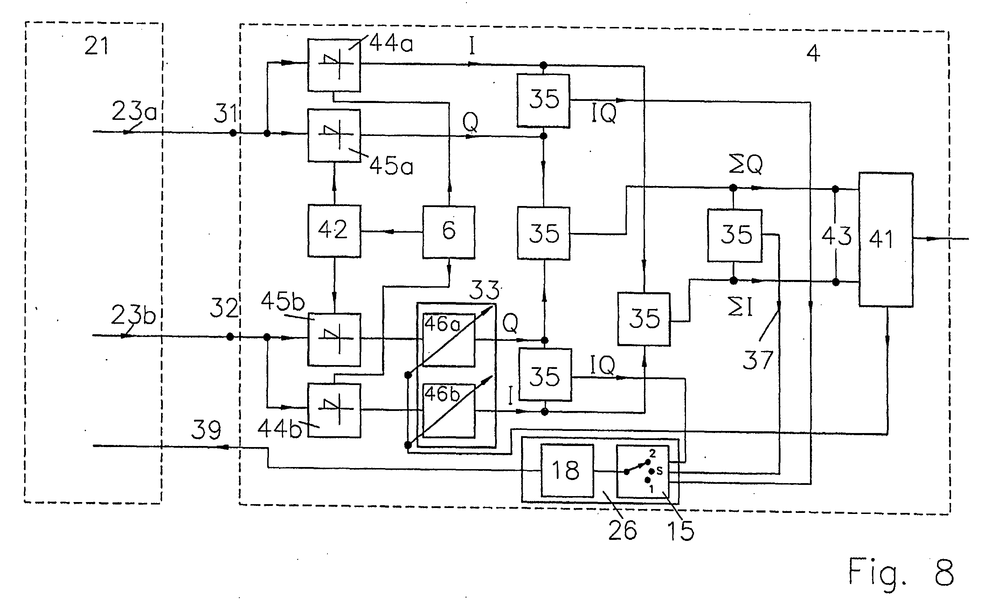

Fig. 8: Anordnung nach der Erfindung mit einer Empfangseinrichtung 4 mit jeweils einem I-Freqüenzumsetzer 44 und einem einem Q-Frequenzumsetzer 45 in den beiden Signalpfaden 1,2 31,32 und Summationsgliedern 35 für die Rückbildung der frequenzmodulierten Signale in den Signalpfaden 1,2 31,32 und im Summensignalpfad 43 zur schnellen Detektion der Störung mit analog arbeitenden Störungsdetektoren 18. Die Phasendrehung erfolgt durch getrennte Bewertung der zwischenfrequenten I- und Q-Signale im Phasendrehglied 33. Im DSP 41 werden die Signale ΣQ und ΣI getrennt digitalisiert und das Phasendrehglied 33 vom Phasenregler mit Tiefpaß-Charakter 34 vorzugsweise digital angesteuert.

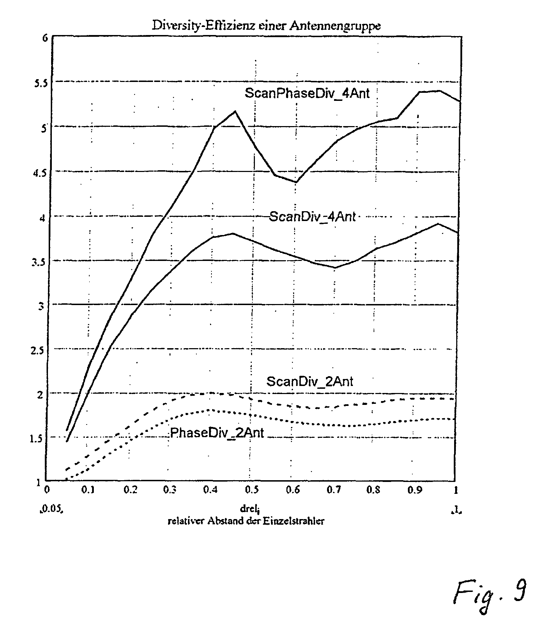

Fig. 9: Diversity-Effizienz einer linearen Antennengruppe in Abhängigkeit von dem auf die Wellenlänge bezogenen Abstand zwischen den Elementen für folgende Fälle:
   PhaseDiv_2Ant: Anordnung im Phasen-Modus mit zwei Antennen
   ScanDiv_2Ant: Anordnung im reinen Scanning-Modus mit zwei Antennen
   ScanDiv_4Ant: Anordnung in reinen Scanning-Modus mit vier Antennen
   ScanPhaseDiv_4Ant: Anordnung nach der Erfindung im Phasen-Modus mit jeweils den beiden am wenigsten gestörten Antennensignalen aus vier verfügbaren Antennensignalen.

Die grundsätzliche Anordung einer Diversityantennenanlage nach der Erfindung ist in Fig. 2 dargestellt. Die Empfangseinrichtung 4 besitzt einen ersten Signalpfad 31 und einen zweiten Signalpfad 32, in dem eine Phasendreheinrichtung eingeschaltet ist. Im Übertragungsblock 36 wird nach dem Stand der Technik das Signal im zweiten Empfangssignalpfad mit einer Hilfsmodulation beaufschlagt, mit dessen Hilfe die Phasendreheinrichtung 33 durch eine Phasenregeleinrichtung 34 derart angesteuert ist, dass am Ausgang des Summationsgliedes 35 die Signale im ersten Empfangspfad und im zweiten Empfangspfad gleichphasig summiert sind. In der Mehrantennenanlage 21 sind steuerbare Schalter 5 enthalten, mit deren Hilfe abhängig von den Schaltstellungen der steuerbaren Schalter 5 jeweils Signale 23a bzw. 23b an den ersten 31 und den zweiten 32 Empfangssignalpfad geführt sind. Somit werden jeweils zwei dieser Antennensignale mit Hilfe der Empfangssignalpfade gleichphasig summiert, wobei diese Summation sowohl in der Ebene des hochfrequenten Eingangssignals als auch in der Zwischenfrequenzebene erfolgen kann.

Um die von der Phasendreheinrichtung 33 nicht ausregelbaren Frequenzhubstörungen im summierten Signal 37 zu vermeiden, wird dieses Signal einem Störungsdetektor 18 zur extrem raschen Erkennung des durch Frequenzstörhub gestörten Summensignals zugeführt, dessen Störungserkennungssignal 38 wiederum einer steuerbaren logischen Schalteinrichtung 11 zugeführt ist, welche in der Mehrantennenanlage 21 durch Wahl einer unterschiedlichen Schaltstellung der Schalter 5a bzw. 5b an mindestens einem der Eingänge 31 bzw. 32 ein anderes Empfangssignal liefert. Das rasche Weiterschalten der Schalter 5a bzw. 5b bewirkt, dass der Phasenregelkreis zunächst außer Tritt kommt.

Um sicherzustellen, dass sich durch das erneute Einschwingen des Phasenregelkreises durch die Phasendreheinrichtung 33 keine zu schnellen Phasenänderungen ergeben, deren zeitliche Ableitung einen hörbaren Frequenzstörhub erzeugen würde, ist es deshalb erfindungsgemäß notwendig, der Phasenregeleinrichtung 34 den Charakter einer Tiefpaßübertragungsfunktion zu geben, d.h. die maximale Phasenänderungsgeschwindigkeit ist so einzustellen, dass sich auch im Fangbereich der Phasenregelung keine hörbaren Frequenzstörhübe dabei ergeben können. Andererseits darf die Phasenregelgeschwindigkeit nicht so begrenzt werden, dass die bei einer Fahrt durch das Rayleigh-Empfangsfeld sich ergebenden Phasenänderungen von im Frequenzhub ungestörten Signalen 23a und 23b der Phasenregelkreis der erforderlichen Phasenänderung zur gleichphasigen Überlagerung der Signale im Summationsglied 35 nicht mehr folgen kann. Hierfür sind Zeitkonstanten in der Größenordnung von 1 bis 20 msec zweckmäßig. Während der Einschwingzeit des Regelkreises für das neue Paar von Antennensignalen entstehen dann keine zusätzlichen Störungen, sondern das Zeitverhalten des Signals 37 ist während dieser Zeit vergleichbar mit dem Empfang im Rayleigh-Empfangsfeld. Auch für den Grenzfall, dass die Phasenregeleinrichtung nicht einschwingen kann, wird somit aufgrund der Signalüberwachung mit Hilfe des Störungsdetektors 18 mit Hilfe der Vielzahl von Antennen für ein störungsfreies Signal 37 gesorgt.

In Fig. 3 ist eine komplexere und allgemeiner ausgestaltete Mehrantennenanlage 21 dargestellt, mit deren Hilfe durch Umschaltung von Impedanzen 7a bis 7d mit Hilfe der Schalter 8a bis 8d die unterschiedlichsten Signalpaare 23a bzw. 23b den Empfangssignalpfaden 31 bzw. 33 zugeführt werden.

Mit Diversitysystemen erreicht man eine erhebliche Verbesserung der Empfangsqualität. Diese ergibt sich aus der Diversity-Effizienz, die sich wiederum aus der Reduzierung der Störhäufigkeit durch das Diversitysystem ermitteln läßt. Hierbei ist die Diversity-Effizienz n als die äquivalente Anzahl voneinander unabhängiger, d.h. dekorrelierter Antennensignale definiert. Bezeichnet man die in einem einzelnen Antennensignal auftretende Störwahrscheinlichkeit mit pₑ , dann ist die im Empfänger des Diversitysystems mit der Diversity-Effizienz n auftretende Störwahrscheinlichkeit p_{d} = pₑⁿ. Mit dieser Definition können verschiedene Systeme hinsichtlich ihrer Leistungsfähigkeit miteinander verglichen werden. Die Diversity-Effizienz n mehrerer Diversitysysteme ist für das Beispiel von bis zu vier im relativen Abstand drei voneinander in einer Linie positionierten Antennen mit Rundstrahlcharakteristik in Abhängigkeit von drei = Abstand/λ in Fig. 9 für den sehr häufig auftretenden Fall von Gleich- bzw. Nachbar-kanalstörungen gegenübergestellt.

Würde man z.B. das System in Fig. 2 bei abgeschaltetem Störungsdetektor 18, also nach dem Stand der Technik ausschließlich mit Phasenregelung betreiben und wären die beiden Empfangssignale 23 von zwei im Abstand drei positionierten Antennen mit Rundcharakteristik fest aufgeschaltet, so ergäbe sich die als PhaseDiv_2Ant gekennzeichnete Kurve für die daraus resultierende Diversity-Effizienz in Fig. 9. Im Vergleich hierzu geht die Diversity-Effizienz eines reinen Scanning-Diversitysytems mit denselben beiden Antennen aus der Kurve ScanDiv_2Ant hervor. Die mit ScanDiv_4Ant bezeichnete Kurve in Fig. 9 beschreibt die Diversity-Effizienz der auf vier Antennen erweiterten und in einer Linie angeordneten Antennengruppe. Daraus ist ersichtlich, dass durch die zur Verfügungstellung mehrerer Antennen die Diversity-Effizienz stark ansteigt und bei hinreichend großen Abständen nahezu die nummerische Anzahl der Antennen erreichen kann.

Die Verbesserung, die sich mit der gemäß der vorliegenden Erfindung über den Stand der Technik hinaus erreichen läßt, ist z.B. für die beschriebene Antennengruppe in Fig. 9 durch die mit ScanPhaseDiv_4 Ant beschrieben. Je nach Abstand zwischen den Einzelstrahlern der Antennengruppe läßt sich im vorgegebenen Beispiel im reinen 4-Antennen-Scanning-Betrieb durch Anwendung der Erfindung die Diversity-Effizienz um den Wert 1,5 steigern. Aufgrund des exponentiellen Gesetzes p_{d} = pₑⁿ würde sich bei einer Fehlerwahrscheinlichkeit von pₑ = 0,1 die Fehlerwahrscheinlichkeit für das erfindungsgemäße Antennensystem ausgehend vom reinen Scanning-Betrieb um den weiteren Faktor von pₑ^{1,5} = 0,03 reduzieren. Ähnliche Verbesserungen lassen sich auch mit 4 kompakt auf der Fensterscheibe eines Kraftfahrzeugs angeordneten Antennen erreichen, deren unterschiedliches Empfangsverhalten trotz der Nähe zueinander aus dem unterschiedlichen Zusammenwirken mit der Fahrzeugkarosserie resultiert. Hinzu kommt aufgrund der reduziert auftretenden Störungen im summierten Ausgangssignal 37 eine Reduzierung der dort wirksamen Schalthäufigkeit und in der Folge ein subjektiv empfundener ruhigerer UKW-Empfang, wenn die Erfindung, wie im folgenden gezeigt, vorteilhaft ausgestaltet wird. Ferner ergibt sich im Phasenmodus jeweils die erwünschte Verbesserung des Signal-Rauschverhältnisses durch die gleichphasige Überlagerung der Nutzsignale in den beiden Signalpfaden. Die vorliegende Erfindung läßt sich ebenso auf alle bekannten Diversitysysteme mit Phasenregelung anwenden, d.h. auf Systeme mit Maximum-Ratio-Regelung oder ganz allgemein mit einer Regelung der Phase im Hinblick auf ein optimales Nutz-Störverhältnis im summierten Ausgangssignal 37 auch bezüglich Nachbarkanal- und Gleichkannalstörungen.

Als obere Grenzfrequenz für das Phasenstellsignal 25 hat sich in der Praxis bei bestehenden Systemen etwa 50 Hz für den Empfang im UKW-Rundfunkbereich als günstig erwiesen. Damit ist die Regelzeit TE nicht kleiner als ca. 20 ms. Die vorliegende Erfindung nutzt die Tatsache, dass in der Antennenanlage mit Schalteinrichtung 21 eine größere Anzahl als zwei Empfangssignale verfügbar sind. In Empfangsgebieten mit schlechter Versorgung d.h. mit großer Störhäufigkeit in den einzelnen Antennensignalen und somit auch in dem aus jeweils zwei dieser Antennensignale gebildeten Summensignal liefert die phasengleiche Summation solcher Signale praktisch keinen Vorteil. Denn in diesen Gebieten besteht zwischen aufeinanderfolgenden Störanzeigen für den Regelkreis nicht genügend Zeit einzuschwingen. In solchen Empfangssituationen ist es wesentlich vorteilhafter, auf die Summenbildung durch Abschalten eines Signalpfads zu verzichten und mit Hilfe eines schnell anzeigenden Störungsdetektors 18 dem verbleibenden Signalpfad 1,2 31,32 nach Auftreten jeder Störung ein anderes Empfangssignal 23 zuzuführen. Damit läuft das System im reinen Scanning-Modus.

Um eine sinnvolle Nutzung der beiden Signalpfade in den Gebieten mit unterschiedlicher Störhäufigkeit der Antennensignale zu gewährleisten, wird in einer vorteilhaften Ausgestaltung der Erfindung zwischen dem Phasen-Modus mit der Zuweisung unterschiedlicher Antennen nach den im folgenden geschilderten Strategien und dem reinen Scanning-Modus umgeschaltet. Wenn das Antennensystem im Scanning-Modus gestartet wird, d.h. der Signalpfad 2 in Fig. 4 durch Öffnen des Signalpfadschalters 16 abgeschaltet ist, dann wird durch das Phasenstellsignal 25 der Phasenregler mit Tiefpaß-Charakter 34 stillgelegt und der FM-Empfänger 1 erhält am Ausgang des Summationsglieds 35 ausschließlich das Empfangssignal 23a. Bei Auftreten einer Störung im summierten Ausgangssignal 37 wird über die Logikschaltung 14 ein Adresssignal 39 generiert, welches über die Schalteinrichtung 11 ein anderes Empfangssignal 23a durchschaltet. Mit dem Störerkennungssignal 38 wird jeweils ein im Signalbewertungsprozessor 26 befindliches Zeitglied 27 aktiviert, mit dessen Hilfe die Zeit bis zum darauffolgenden Störerkennungssignal 38 festgestellt wird. Erfindungsgemäß ist ein Übergang vom Scanning-Modus in den Phasen-Modus dann zweckmäßig, wenn über eine hinreichende Anzahl solcher Sequenzen die Aufschaltzeit TA der aufeinander folgenden Empfangssignale 23a nennenswert größer ist als die Einschwingzeit TE des Phasenregelkreises. Als Kriterium für die Auslösung eines Umschaltbefehls S-P vom Scanning-Modus zum Phasen-Modus dient deshalb eine vorgegebene Aufschaltzeit TASP, welche vorzugsweise 5 - 10mal TE gewählt ist. Wenn die Aufschaltzeit TA die als Kriterium gewählte Zeit TASP erreicht, so wird der Signalpfad 2 32 durch Schließen des Signalpfadschalters 16 hinzugeschaltet, der Phasenregler mit Tiefpaß-Charakter 34 durch Freigabe durch das Phasenstellsignal 25 aktiviert und somit der Phasenregelkreis geschlossen. Aufgrund der mit Hilfe von TA geprüften hinreichend kleinen Störhäufigkeit kann der Phasenregelkreis einschwingen. Dieses Einschwingen kann mit einem beliebigen Paar aus den verfügbaren Empfangssignalen 23 erfolgen. Die optimale Auswahl der den beiden Signalpfaden 1,2 31,32 zugeführten Empfangssignale 23 aus den verfügbaren Empfangssignalen wird weiter unten beschrieben.

Treten aufgrund schlechter Empfangsverhältnisse für alle Empfangssignale 23 im Phasen-Modus im summierten Ausgangssignal 37 Empfangsstörungen auf, so werden diese vom schnell anzeigenden Störungsdetektor 18 festgestellt, das Zeitglied 27 aktiviert und über die Logikschaltung 14 und die Schalteinrichtung 11 zunächst sukzessive mindestens eines der Empfangssignale 23 ausgewechselt. Gleichzeitig wird mit jedem Auftreten des Störerkennungssignal 38 die Aufschaltzeit TA für das aufgeschaltete Paar der Empfangssignale 23 festgestellt. Als Kriterium für die Auslösung eines Umschaltbefehls P-S vom Phasen-Modus zum Scanning-Modus dient deshalb eine vorgegebene Aufschaltzeit TAPS, welche ebenfalls vorzugsweise 5 - 10mal TE gewählt ist. Wenn die Aufschaltzeit TA die als Kriterium gewählte Zeit TAPS erreicht, so wird der Signalpfad 2 32 durch Öffnen des Signalpfadschalters 16 abgeschaltet, der Phasenregler mit Tiefpaß-Charakter 34 durch das Phasenstellsignal 25 fest eingestellt und somit der Phasenregelkreis geöffnet. Das System ist damit auf den Scanning-Modus zurückgeschaltet. Mit den Kriterien TAPS und TASP kann somit das System unter Berücksichtigung des Tiefpaßcharakters des Phasenregelkreises zwischen den beiden Betriebsmoden umgeschaltet werden und somit der Nachteil eines nicht zur Ruhe kommenden Phasenregelkreises in Gebieten mit häufig auftretenden Empfangsstörungen erfindungsgemäß vermieden werden.

In weiteren vorteilhaften Ausgestaltungen der Erfindung wird mit den Anordnungen in den Fign. 5 - 8 eine Strategie im Scanning-Modus dahingehend verfolgt, dass mit Hilfe des abgeschalteten Signalpfads 2 durch wechselweises Anschalten der verfügbaren Empfangssignale 23b die Störhäufigkeit der einzelnen Signale festgestellt und in der Logikschaltung 14 eine Prioritätsliste hinsichtlich der Störreinheit der Empfangssignale 23b aufgestellt wird. Somit liegt in der Logikschaltung 14 während des Betriebs im Scanning-Modus die Prioritätsliste stets aktualisiert vor. Wird das Kriterium TASP zur Umschaltung vom Scanning-Modus in den Phasen-Modus erfüllt, dann werden erfindungsgemäß diejenigen Signale den Signalpfaden 1 31 und 2 32 über die Schalteinrichtung 11 zugewiesen, welche die Prioritätsliste anführen. Das System kann somit mit den beiden besten Signalen im Phasen-Modus einschwingen. Damit ist die Wahrscheinlichkeit für das Auftreten von Störungen im summierten Ausgangssignal 37 minimiert und die größtmögliche Ruhe des Systems gewährleistet. Im Phasen-Modus können in einer weiteren vorteilhaften Ausgestaltung der Erfindung die Empfangsstörungen in den Empfangssignalen 23a und 23b jeweils gesondert festgestellt werden und bei Auftreten einer Störung im summierten Ausgangssignal 37 das schlechtere der beiden Empfangssignale 23a und 23b durch ein anderes verfügbares Empfangssignal 23 ausgetauscht werden. Dieser Austausch erfolgt in der Regel völlig ohne Störung des Ausgangssignals 37.

Mit der Anordnung in Fig. 5 wird diese Methode mit Hilfe des Signalpfadselektors 15, welcher von einem in der Logikschaltung 14 befindlichen Taktgeber 29 gesteuert wird, realisiert. Hierbei wird im Scanning-Modus der Störungsdetektor 18 wechselweise zwischen der Schaltstellung 1 und S zur Prüfung des Empfangssignals 23 im Signalpfad 2 bzw. des Empfangssignals 23 im summierten Ausgangssignal 37 durch den Taktgeber 29 umgeschaltet. Der Taktgeber 29 schaltet diese Signale jeweils über eine notwendige Prüfzeit an den Störungsdetektor 18, so dass in der Logikschaltung 14 ein Adresssignal 39 ausgesandt wird, wodurch zum einen bei Vorliegen einer Störung im summierten Ausgangssignal 37 eine Umschaltung des Empfangssignals 23a erfolgt und zum andern durch Prüfung des Empfangssignals 23b im Signalpfad 2 die Prioritätsliste für die verfügbaren Empfangssignale 23 aktualisiert wird. Auf diese Weise wird durch Einsatz eines Signalpfadselektors 15, welcher als Störungsdetektor mit extrem schneller Anzeige 18a realisiert ist, der aufwendige Einsatz mehrerer Störungsdetektoren 18 umgangen. Bei Erfüllung des TASP-Kriteriums schaltet das System in den Phasen-Modus um und den beiden Signalpfaden 31,32 werden diejenigen Empfangssignale 23 zugeführt, welche mit höchster oder hoher Priorität in der Liste der Logikschaltung 14 aktualisiert vorliegen. Im Phasen-Modus wird der Signalpfadselektor 15 sequentiell jeweils über die notwendige Prüfzeit des Störungsdetektors 18 zwischen den drei Schaltstellungen umgeschaltet, so dass in diesem Modus die Störhäufigkeit sowohl der einzelnen Signale der beiden Signalpfade als auch des summierten Ausgangssignals 37 in der Logikschaltung 14 vorliegt. Bei Auftreten einer Störung im summierten Ausgangssignal 37 wird dann das Signal in dem Signalpfad ausgewechselt, welches die größere Störhäufigkeit besitzt. Zur Vermeidung hörbarer Störungen sollte hierfür die Störerkennungszeit des Störungsdetektors 18 nicht wesentlich größer als 50 µs sein.

Bisher bekannte, schnell anzeigende Störungsdetektoren 18, wie sie z.B. in P 33 26 062.9, P33 34 735.2 und P 35 17 247.90 beschrieben sind, besitzen aufgrund ihrer Fähigkeit, Empfangsstörungen im summierten Ausgangssignal 37 in der erforderlichen Zeit von weniger als 50 µs zu erkennen, eine vergleichsweise schlechte Auflösung hinsichtlich der Störgröße. Für die quantifizierte Feststellung der Störgröße zum Zwecke einer Reihung in der Prioritätsliste ist es deshalb wünschenswert, einen Störungsdetektor mit besserer Auflösung 18b, wie er z.B. aus der P 32 43 146.5-35 bekannt ist, zu verwenden. Deshalb wird in Fig. 6 in einer vorteilhaften Ausgestaltung der Erfindung zur Aufstellung der Prioritätsliste ein Störungsdetektor mit besserer Auflösung 18b über den Signalpfadselektor 15 angeschaltet, welcher im Scanning-Modus das Signal im Empfangssignal 23b prüft. Die Prüfung des summierten Ausgangssignals 37 muß mit der notwendigen kurzen Prüfzeit mit Hilfe des Störungsdetektors mit extrem schneller Anzeige 18a geprüft werden. Nach Umschalten des Systems in den Phasen-Modus werden die Empfangssignale 23 in den beiden Signalpfaden 1,2 31,32 sequentiell durch Umschalten des Signalpfadselektors 15 geprüft.

In Fig. 7 ist in einer weiteren vorteilhaften Maßnahme ein zusätzlicher Störungsdetektor mit besserer Auflösung 18c eingeführt, so dass der Signalpfadselektor 15 entfallen kann. Dadurch wird die Qualität der Prioritätsliste weiterhin verbessert. Mit den Systemen in den Fign. 5 bis 7 läßt sich mit einer vorgegebenen Antennenanordnung die maximal erreichbare Diversity-Effizienz mit minimal störungsbehafteter Schaltaktivität realisieren.

In der modernen Empfängertechnik werden häufig Quadraturmodulatoren zur Frequenzumsetzung verwendet. In Fig. 8 ist in der Empfangseinrichtung mit je einem I-Frequenzumsetzer 44a, 44b und einem Q-Frequenzumsetzer 45a, 45b enthalten, welche von einem gemeinsamen Oszillator 6 angesteuert werden und die Ansteuerung der Q-Frequenzumsetzer über ein 90°-Phasendrehglied 42 erfolgt. Die zwischenfrequenten I- und Q-Signale werden in modernen Empfängerkonzepten in einem digital arbeitenden Prozessor 41 (DSP) weiter verarbeitet. Aufgrund der z.Z. noch begrenzten Bitrate in einem solchen Prozessor kann es deshalb notwendig sein, den extrem schnell anzeigenden Störungsdetektor 18 als analog arbeitendes Element auszuführen und im Analogbereich des Empfängers anzuordnen. Die Gewinnung des vollständigen frequenzmodulierten zwischenfrequenten Signals erfolgt in beiden Signalpfaden 31, 32 mit Hilfe der Summationsglieder 35, deren Ausgänge mit den Klemmen 1 und 2 im Signalpfadselektor 15 angeschlossen sind. Zur Bildung des summierten Ausgangssignals 37 ist ein weiteres Summationsglied 35 vorhanden, in welchem die Signale ΣI und die Signale ΣQ addiert werden und der Klemme S des Signalpfadselektors 15 zugeführt werden. Die Regelung der Phase im Signalpfad 2 32 erfolgt durch Amplitudenbewertungsglieder 46a, 46b, welche vorzugsweise von dem DSP 41 zur Regelung der Phase angesteuert werden. Aufgrund der verhältnismäßig langsamen Regelvorgänge kann die Einstellung der Phase auch bei begrenzter Datenrate des DSP 41 erfolgen.

Die künftige Entwicklung in der Mikroelektronik lässt erwarten, dass schon in naher Zukunft Datenraten von solcher Größe zu erwarten sind, dass auch die schnelle Störerkennung im DSP 41 im Rahmen der digitalen Signalverarbeitung durchgeführt werden kann. Damit kann die gesamte oben geschilderte Strategie zur Auswertung der verfügbaren Empfangssignale 23 als entsprechend gestaltete Software für den digitalisierten Signalprozess im DSP 41 erfolgen.

### Bezugszeichenliste

FM-Empfänger 1
Mischer 2
Masse 3
Empfangseinrichtung 4
Auswahlschalter (mehrpolig) 5
Oszillator 6
Impedanz 7
Umschalter (zweipolig) 8
Steuerleitung zu den Auswahlschaltern 9
Störungsanzeigesignal 10
Schalteinrichtung 11
Antennenleitung 12
Selektionsschaltung 13
Logikschaltung 14
Signalpfadselektor 15
Signalpfadschalter 16
Leerstelle 17
Störungsdetektor 18
Störungsdetektor m. extrem schneller Anzeige 18a
Störungsdetektor m. besserer Auflösung 18b
Störungsdetektor m. besserer Auflösung 18c
ZF-Signal 19
Empfänger 20
Antennenanlage mit Schalteinrichtung (Mehrantennenanlage) 21
Antennenanschlussstelle 22
Empfangssignal 23
Taktsignale 24
Phasenstellsignal 25
Signalbewertungsprozessor 26
Zeitglied 27
Wartezeit 28
Taktgeber 29
Prüfzeit 30
Signalpfad 1 31
Signalpfad 2 32
Phasendreh(glied)einrichtung 33
Phasenreg(ler)eleinrichtung mit TP-Charakter 34
Summationsglied 35
Übertragungsblock zur Hilfsmodulationserzeugung 36
summiertes Ausgangssignal 37
Störerkennungssignal 38
Adresssignal 39
ZF-Filter 40
DSP 41
90°-Phasendrehglied 42
Summensignalpfad 43
I-Frequenzumsetzer 44
Q-Frequenzumsetzer 45
Amplitudenbewertungsglieder 46a,46b

## Patentansprüche

1. Antennendiversityanlage zum Empfang des frequenzmodulierten Rundfunks mit phasengeregelter Summation von Antennensignalen für Fahrzeuge mit einer Mehrantennenanlage (21) mit mindestens zwei Antennenausgangssignalen und einer Empfangseinrichtung (4) mit je einem Eingang für einen ersten (31) und einen zweiten (32) Empfangssignalpfad, von denen der zweite der beiden Empfangssignalpfade eine durch eine Phasenregeleinrichtung (34) gesteuerte Phasendreheinrichtung (33) enthält, an deren Ausgang das Empfangssignal die gleiche Phase besitzt wie im ersten Signalpfad (31) und die beiden Empfangssignale (23a, 23b) in einem Summationsglied (35) phasengleich summiert sind und das summierte Signal (37) der Frequenzdemodulation zugeführt ist,
**dadurch gekennzeichnet, dass**
die Mehrantennenanlage (21) eine steuerbare logische Schalteinrichtung (11) enthält, bei der mit unterschiedlichen Schaltstellungen der Auswahlschalter (5) jeweils ein diversitätsmäßig unterschiedliches Empfangssignal (23) an mindestens einen der beiden Eingänge der Empfangseinrichtung (4) zugeführt ist und das summierte Signal (37) einem Störungsdetektor (18) zur extrem raschen Erkennung eines durch Frequenzstörhub gestörten Summensignals (37) zugeführt ist, dessen Störungserkennungssignal (38) bei Vorliegen einer Empfangsstörung die logische Schalteinrichtung (11) in eine andere Schaltstellung weiterschaltet und die Phasenregeleinrichtung (34) Tiefpaßcharakter zur Begrenzung der Phasenregelgeschwindigkeit besitzt. (Fig.1, Fig. 2)

2. Antennendiversityanlage nach Anspruch 1
**dadurch gekennzeichnet, dass**
in der steuerbaren logischen Schalteinrichtung (11) eine Liste mit einer vorgegebenen vorteilhaften Reihung der Schaltstellungen der Auswahlschalter (5) bzw./und der Umschalter (8) in einem Speicher abgelegt ist, so dass bei Anzeige einer Störung im Summensignal (37) mit minimaler Umschaltzeit zunächst dem einen der beiden Signalpfade (31,32) und bei einer darauf folgenden Störungsanzeige dem anderen der beiden Signalpfade (31,32) wechselweise ein anderes Empfangssignal (23) zugeführt ist. (Fig. 3)

3. Antennendiversityanlage nach Anspruch 1
**dadurch gekennzeichnet, dass**
ein Signalbewertungsprozessor (26) vorhanden ist, in dem der Störungsdetektor (18) und ein Zeitglied (27) zur Feststellung der Zeitintervalle TS zwischen aufeinanderfolgenden Störungsanzeigen und eine Logikschaltung (14) enthalten sind und die Zeitintervalle TS in der Logikschaltung (14) mit der Einschwingzeit TE der Phasenregeleinrichtung (34) verglichen ist bzw. sind und bei einmaliger bzw. mehrfacher Unterschreitung einer geeignet vorgegebenen Aufschaltzeit TAPS, welche kleiner oder jedenfalls nicht wesentlich größer als die Einschwingzeit TE gewählt ist, ein elektrischer Umschaltbefehl P-S zur Umschaltung vom Phasen-Modus zum Scanning-Modus erzeugt ist. (Fig. 4)

4. Antennendiversityanlage nach Anspruch 3
**dadurch gekennzeichnet, dass**
mit dem elektrischen Umschaltbefehl zur Umschaltung vom Phasen-Modus zum Scanning-Modus ein Phasenstellsignal (25) in der Logikschaltung (14) zur Auftrennung des Phasenregelkreises und zur Feststellung des Phasendrehglieds (33) auf einen zeitlich konstanten Phasenwert erzeugt ist und mindestens einem der beiden Signalpfade (31,32) bei Anzeige einer Störung durch den Störungsdetektor (18) über ein von der Logikschaltung (14) generiertes und an die logische Schalteinrichtung (11) geleitetes Adreßsignal (39) ein anderes Empfangssignal (23) zugewiesen ist und das System im Scanning-Modus arbeitet. (Fig. 4)

5. Antennendiversityanlage nach Anspruch 4
**dadurch gekennzeichnet, dass**
für den Betrieb im Scanning-Modus über die Logikschaltung (14) beiden Signalpfaden (31,32) dasselbe Empfangssignal (23) zugeleitet ist und das Phasendrehglied (33) derart fest eingestellt ist, dass im Summationsglied (35) eine gleichphasige Überlagerung der Signale aus den Signalpfaden (31,32) gegeben ist. (Fig. 4)

6. Antennendiversityanlage nach Anspruch 4 oder 5
**dadurch gekennzeichnet, dass**
für den Betrieb im Scanning-Modus die Zeitintervalle TS zwischen aufeinanderfolgenden Störungsanzeigen in der Logikschaltung (14) laufend registriert und den Schaltstellungen in der Antennenanlage mit Schalteinrichtung (21) in einer Tabelle zugeordnet sind und diese Tabelle zur laufenden Fortschreibung einer Prioritätsliste nach fallenden Zeitintervallen TS sortiert sind und bei Anzeige einer Störung durch den Störungsdetektor (18) die Logikschaltung (14) über ein Adresssignal (39) auf ein anderes Empfangssignal (23) mit höchster bzw. hoher Priorität umgeschaltet wird.

7. Antennendiversityanlage nach Anspruch 6
**dadurch gekennzeichnet, dass**
ein Signalpfadselektor (15) vorhanden ist, an welchen eingangsseitig die Signalpfade 1 und 2 (31,32) und der Summensignalpfad (43) angeschlossen sind und ausgangsseitig der Störungsdetektor (18) angeschaltet ist und in der Logikschaltung (14) ein Taktgeber (29) vorhanden ist, welcher jeweils über eine zur Anzeige von Störungen im Störungsdetektor (18) notwendige Prüfzeit (30) den Signalpfadselektor (15) zur Prüfung in jeweils einen der Signalpfade zum Störungsdetektor (18) durchschaltet. (Fig. 5)

8. Antennendiversityanlage nach Anspruch 7
**dadurch gekennzeichnet, dass**
für den Betrieb im Scanning-Modus dem Summationsglied (35) nur ein Empfangssignal (23) eines der beiden Signalpfade 1 und 2 (31,32) (z.B. Signalpfad 1 (31)) durch Öffnen eines im anderen Signalpfad (z.B. Signalpfad 2 (32)) vor dem Summationsglied (35) befindlichen Signalpfadschalters (16) zugeleitet ist und die Logikschaltung (14) in Verbindung mit dem Taktgeber (29) derart gestaltet ist, dass in aufeinanderfolgenden Taktperioden zum einen durch Umschalten des Signalpfadselektors (15) zwischen den beiden Signalpfaden 1 und 2 (31 und 32) in Verbindung mit dem sequentiellen Anschalten unterschiedlicher Empfangssignale (z.B. Empfangssignal 23b) durch die Logikschaltung (14) eine Prioritätsliste hinsichtlich der Störreinheit der Empfangssignale (z.B. Empfangssignal 23b) stets aktualisiert vorliegt und zum anderen, dass bei Einstellung des Signalpfadselektors (15) auf den Summensignalpfad (43) und einer dort auftretenden Störung dem Summationsglied (35) über die Logikschaltung (14) ein unterschiedliches, gemäß der in der Logikschaltung (14) vorliegenden Prioritätsliste bekanntes Empfangssignal (z.B. Empfangssignal 23a) mit höchster oder hoher Priorität zugeleitet ist. (Fig. 5)

9. Antennendiversityanlage nach einem der Ansprüche 5 bis 8,
**dadurch gekennzeichnet, dass**
bei einmaliger bzw. mehrfacher Überschreitung der vorgegebenen Aufschaltzeit TASP im Scanning-Modus, welche mindestens gleich groß, vorzugsweise jedoch wesentlich größer als die Einschwingzeit TE gewählt ist, ein elektrischer Umschaltbefehl S-P vom Scanning-Modus zum Phasen-Modus erzeugt ist. (Fig. 4-8)

10. Antennendiversityanlage nach Anspruch 9 in Verbindung mit Anspruch 7
**dadurch gekennzeichnet, dass**
bei Auftreten des elektrischen Umschaltbefehls S-P zur Umschaltung vom Scanning-Modus zum Phasen-Modus über das Phasenstellsignal (25) in der Logikschaltung (14) die Schließung des Phasenregelkreises bewirkt ist und der Signalpfadschalter (16) durch ein Signal der Logikschaltung (14) geschlossen wird und für den zugehörigen Signalpfad (z.B. Signalpfad 2 (32)) durch ein Adreßsignal (39) und die daraus resultierende Einstellung der Schalteinrichtung (11) ein Empfangssignal mit höchster oder hoher Priorität aus der Prioritätsliste ausgewählt ist.

11. Antennendiversityanlage nach Anspruch 9 in Verbindung mit Anspruch 7
**dadurch gekennzeichnet, dass**
zur Anzeige von Störungen im Summensignal ein Störungsdetektor mit extrem schneller Anzeige (18a) permanent angeschlossen ist und ein Störungsdetektor mit besserer Auflösung (18b) vorhanden ist, welcher an einen zwischen den beiden Signalpfaden 1 und 2 (31,32) getakteten Signalpfadselektor (15) angeschlossen ist, an dessen Ausgang die Störungsanzeigesignale (10) für beide Signalpfade 1 und 2 (31,32) wechselnd mit guter Auflösung ihrer Größe der Logikschaltung (14) zugeleitet sind. (Fig. 6)

12. Antennendiversityanlage nach Anspruch 11
**dadurch gekennzeichnet, dass**
zum Zwecke der permanenten Verfügbarkeit der Störungsanzeigesignale (10) für beide Signalpfade 1 und 2 (31,32) jeweils ein gesonderter Störungsdetektor mit besserer Auflösung (18b bzw. 18c) vorhanden ist. (Fig. 7)

13. Antennendiversityanlage nach einem der Ansprüche 1 bis 12
**dadurch gekennzeichnet, dass**
die Empfangseinrichtung (4) als Überlagerungsempfänger gestaltet ist und das Phasendrehglied (33), das Summationsglied (35) und der Störungsdetektor (18) bzw. die Störungsdetektoren (18a,b,c) in die Zwischenfrequenzebene eingebracht sind. (Fig. 4 bis 8)

14. Antennendiversityanlage nach Anspruch 13
**dadurch gekennzeichnet, dass**
ein Überlagerungsempfänger mit jeweils einem I- und Q-Frequenzumsetzer zur Erzeugung der Inphase- und der Quadratur-Komponente der zwischenfrequenten Empfangssignale (23) in den Signalpfaden 1 und 2 (31,32) mit getrennter Gewichtung der I-Q-Komponenten zur Phaseneinstellung über ein Phasendrehglied (33) mit Phasenregler mit TP-Charakter (34) und mit Summationsgliedern (35) zur Zusammenfassung der I-Q-Komponenten jeweils zur Erzeugung des vollständigen frequenzmodulierten Zwischenfrequenzsignals zur schnellen Detektion von Störungen im analog arbeitenden Störungsdetektor (18) vorhanden ist. (Fig. 8)

15. Antennendiversityanlage nach Anspruch 14
**dadurch gekennzeichnet, dass**
die I- und Q-Komponenten am Ausgang des Summensignalpfads (43) in einem digital arbeitenden Signalprozessor DSP (41) digitalisiert und weiter verarbeitet sind.

16. Antennendiversityanlage nach Anspruch 14
**dadurch gekennzeichnet, dass**
die I- und Q-Komponenten am Ausgang der I- und Q-Frequenzumsetzer (44a, 45a und 44b, 45b) in einem digital arbeitenden Signalprozessor DSP (41) digitalisiert sind und alle Funktionen der Ansprüche 1 bis 13 durch digitale Signalprozesse realisiert sind.

17. Antennendiversityanlage nach einem der Ansprüche 1 bis 14
**dadurch gekennzeichnet, dass**
die Einschwingzeit des Regelkreises für schnelle Fahrt hinreichend klein, jedoch zur Vermeidung eines durch den Regelvorgang hörbaren Störfrequenzhubs nicht zu klein, d.h. vorzugsweise in der Größenordnung von TE=20msec bis 50msec gewählt ist und, dass die vorgegebene Aufschaltzeit TASP im Scanning-Modus als Kriterium zur Auslösung des elektrischen Umschaltbefehls S-P vom Scanning-Modus zum Phasen-Modus vorzugsweise 5 bis 10malTE gestaltet ist und, dass die vorgegebene Aufschaltzeit TAPS im Phasen-Modus als Kriterium zur Auslösung des elektrischen Umschaltbefehls P-S zur Umschaltung vom Phasen-Modus zum Scanning-Modus vorzugsweise ebenfalls im Bereich 5 bis 10malTE gestaltet ist.

18. Antennendiversityanlage nach einem der Ansprüche 1 bis 14
**dadurch gekennzeichnet, dass**
der Störungsdetektor mit extrem schneller Anzeige (18a) derart gestaltet ist, dass die Anzeige einer Störung unter Berücksichtigung von Filterlaufzeiten innerhalb von 50µsec, jedenfalls unter 100µsec gegeben ist, und dass der Störungsdetektor mit besserer Auflösung (18b, 18c) derart gestaltet ist, dass die Anzeige einer Störung unter Berücksichtigung von Filterlaufzeiten innerhalb von 1msec bis 5msec gegeben ist.

19. Antennendiversityanlage nach Anspruch 7 oder 18
**dadurch gekennzeichnet, dass**
dass die Prüfzeit (30) möglichst kurz und somit vorzugsweise zwischen einmal und zweimal so groß gewählt ist wie die benötigte Zeit zur Anzeige einer Störung durch den Störungsdetektor mit extrem schneller Anzeige (18a).

20. Antennendiversityanlage nach einem der Ansprüche 1 bis 19
**dadurch gekennzeichnet, dass**
das Phasendrehglied (33) durch den Phasenregelkreis im Phasen-Modus derart eingestellt ist, dass das Signal-Störverhältnis zu jedem Zeitpunkt maximal ist.

## Claims

1. Antenna diversity system, for receiving frequency-modulated radio signals and employing phase-controlled summation of antenna signals, for vehicles which have a multiple antenna system (21) giving at least two antenna output signals and which have receiving means (4) having respective inputs to a first (31) and a second (32) path for received signals, of which two paths for received signals the second comprises a phase-shifting means (33) controlled by a phase-control means (34), at the output of which phase-shifting means (33) the phase of the received signal is the same as on the first signal path (31), and the two received signals (23a, 23b) are summed, in phase, in a summing element (35) and the summed signal (37) is fed off for frequency demodulation, **characterised in that** the multiple antenna system (21) comprises a controllable logic switching means (11) in which, with the selectors (5) in different switched positions, respective ones of received signals (23) of differing diversity are fed to at least one of the two inputs of the receiving means (4), and the summed signal (37) is fed to an interference detector (18) for the very fast detection of a summed signal distorted by interference-induced frequency shift, the interference-detection signal (38) from which detector (18) switches the logic switching means (11) on to a different switched position when reception interference is present, and the phase-control means (34) is of a low-pass nature to limit the speed at which phase is controlled. (Fig. 1, Fig. 2).

2. Antenna diversity system according to claim 1, **characterised in that** there is stored in a memory in the controllable logic switching means (11) a list giving a preset advantageous sequence for the switched positions of the selectors (5) and/or the changeover switches (8), so that, if interference is indicated in the summed signal (37), a different received signal (23) will, with a minimal changeover time, be fed alternately first to one of the two signal paths (31, 32) and, in the event of a subsequent indication of interference, to the other of the two signal paths (31, 32). (Fig. 3)

3. Antenna diversity system according to claim 1, **characterised in that** a signal evaluation processor (26) is provided in which are contained the interference detector (18), a timer (27) for determining the intervals of time TS between successive interference indications and a logic circuit (14), and the interval(s) of time TS is/are compared in the logic circuit (14) with the settling time TE of the phase-control means (34) and, in the event of a single or multiple failures to reach a suitably preset signal application time TAPS which is selected to be shorter or at least not substantially longer than the settling time TE, an electrical changeover command P-S is generated for a changeover from the phase mode to the scanning mode. (Fig. 4)

4. Antenna diversity system according to claim 3, **characterised in that** the electrical changeover command for a changeover from the phase mode to the scanning mode causes a phase-setting signal (25) to be generated in the logic circuit (14) to disconnect the phase-control circuit and to lock the phase-shifting element (33) to a phase value which is constant over time, and, by means of an address signal (39) which is generated by the logic circuit (14) and conveyed to the logic switching means (11), a different received signal (23) is assigned to at least one of the two signal paths (31, 32) if inference is indicated by the interference detector (18), and the system operates in the scanning mode. (Fig. 4)

5. Antenna diversity system according to claim 4, **characterised in that**, for operation in the scanning mode, the same received signal (23) is conveyed to both signal paths (31, 32) by means of the logic circuit (14), and the phase-shifting element (33) is set to a fixed value such that there is in-phase superimposition of the signals from the signal paths (31, 32) in the summing element (35). (Fig. 4)

6. Antenna diversity system according to claim 4 or 5, **characterised in that,** for operation in the scanning mode, the intervals of time TS between successive interference indications are continuously recorded in the logic circuit (14) and are assigned in a table to the switched positions in the antenna system (21) having switching means, and, to allow a priority list to be continuously updated, this table is sorted by decreasing intervals of time TS and, when interference is indicated by the interference detector (18), the logic circuit (14) is changed over, via an address signal (39), to a different received signal (23) having the highest or a higher priority.

7. Antenna diversity system according to claim 6, **characterised in that** a signal-path selector (15) is provided which is connected at the input end to the signal paths 1 and 2 (31, 32) and to the signal path (43) for the sum signal and at the output end to the interference detector (18), and there is provided, in the logic circuit (14), a clock-signal generator (29) which, in each case for a checking time (30) required in the interference detector (18) for the indication of interference, switches the signal path selector (15) to one at a time of the signal paths to the interference detector (18) for checking purposes. (Fig. 5)

8. Antenna diversity system according to claim 7, **characterised in that**, for operation in the scanning mode, the summing element (35) has conveyed to it only one received signal (23) from one of the two signal paths 1 and 2 (31, 32) (e.g. signal path 1 (31)), by opening a signal path switch (16) which is situated on the other signal path (e.g. signal path 2 (32)) upstream of the summing element (35), and the logic circuit (14), in conjunction with the clock-signal generator (29), is so arranged that, in successive clock-signal cycles, on the one hand a priority list relating to the freedom of the received signals (e.g. received signal 23b) from interference exists in constantly updated form, which is achieved by changeover of the signal path selector (15) between the two signal paths 1 and 2 (31 and 32) in conjunction with the sequential application of different received signals (e.g. received signal 23b) by the logic circuit (14), and on the other hand that, when the signal-path selector (15) is set to the path (43) for the summed signal and there is interference thereon, the summing element (35) has conveyed to it, by means of the logic circuit (14), a different received signal (e.g. received signal 23a) of the highest or a higher priority, which signal is known from the priority list present in the logic circuit (14). (Fig. 5)

9. Antenna diversity system according to one of claims 5 to 8, **characterised in that** if the preset signal application time TASP, which is selected to be at least equal to but preferably considerably longer than the settling time TE, is exceeded once or more than once in the scanning mode, an electrical command S-P for changeover from the scanning mode to the phase mode is generated. (Fig. 4-8)

10. Antenna diversity system according to claim 9 in conjunction with claim 7, **characterised in that**, if the electrical command S-P for changeover from the scanning mode to the phase mode occurs, the phase-control circuit is caused to close by means of the phase-setting signal (25) from the logic circuit (14), and the signal-path switch (16) is closed by a signal from the logic circuit (14), and a received signal of the highest or a highest priority is selected for the associated signal path (e.g. signal path 2 (32)) by means of an address signal (39) and the resultant setting of the switching means (11).

11. Antenna diversity system according to claim 9 in conjunction with claim 7, **characterised in that**, to allow interference in the summed signal to be indicated, a very fast indicating interference detector (18a) is permanently connected and an interference detector (18b) of higher resolution is provided which is connected to a signal-path selector (15), which signal-path selector (15) is clocked between the two signal paths 1 and 2 (31, 32) and from its output the interference-indicating signals (10) for the two signal paths 1 and 2 (31, 32) are conveyed alternately to the logic circuit (14) with their size satisfactorily resolved. (Fig. 6)

12. Antenna diversity system according to claim 11, **characterised in that**, for the purpose of ensuring the permanent availability of the interference-indicating signals (10) for the two signal paths 1 and 2 (31, 32), a separate interference detector of higher resolution (18b and 18c respectively) is provided for each of them. (Fig. 7)

13. Antenna diversity system according to one of claims 1 to 12, **characterised in that** the receiving means (4) is in the form of a superheterodyne receiver and the phase-shifting element (33), the summing element (35) and the interference detector (18) or interference detectors (18a, b, c) are inserted at the intermediate-frequency level. (Figs. 4 to 8)

14. Antenna diversity system according to claim 13, **characterised in that** a superheterodyne receiver is provided having an I and a Q frequency changer to generate the in-phase and quadrature components of the intermediate-frequency received signals (23) on the signal paths 1 and 2 (31, 32), with the I and Q components separately weighted, for phase-setting by means of a phase-shifting element (33) having phase controllers (34) of a low-pass nature and having summing elements (35) for combining the I and Q components in each case in order to generate the complete frequency-modulated intermediate-frequency signal for the fast detection of interference in the interference detector (18), which latter is analog in operation. (Fig. 8)

15. Antenna diversity system according to claim 14, **characterised in that** the I and Q components are digitised and further processed at the output of the signal path (43) for the summed signal in a signal processor DSP (41) which is digital in operation.

16. Antenna diversity system according to claim 14, **characterised in that** the I and Q components are digitised at the outputs of the I and Q frequency changers (44a, 45a and 44b, 45b) in a signal processor DSP (41) which is digital in operation, and all the functions specified in claims to 1 to 13 are performed by digital signal processes.

17. Antenna diversity system according to one of claims 1 to 14, **characterised in that** the settling time TE of the control circuit is selected to be sufficiently short for fast travel but not too short to avoid an interference-induced frequency shift which is audible as a result of the control process, i.e. is preferably of the order of TE = 20 msec to 50 msec, and **in that** the preset signal application time TASP in the scanning mode, which serves as a criterion for the triggering of the command S-P for changeover from the scanning mode to the phase mode, is preferably arranged to be 5 to 10 times the TE, and **in that** the preset signal application time TAPS in the phase mode, which serves as a criterion for the triggering of the command P-S for changeover from the phase mode to the scanning mode, is preferably likewise arranged to be in the range of 5 to 10 times the TE.

18. Antenna diversity system according to one of claims 1 to 14, **characterised in that** the very fast indicating interference detector (18a) is so arranged that, allowing for filter transit times, the indication of interference is given within 50 µsec or at least in less than 100 µsec, and **in that** the interference detector (18b, 18c) of higher resolution is so arranged that, allowing for filter transit times, the indication of interference is given within 1 msec to 5 msec.

19. Antenna diversity system according to claim 7 or 18, **characterised in that** the checking time (30) is selected to be as short as possible and thus preferably to be between once and twice as long as the time required by the very fast indicating interference detector (18a) to indicate interference.

20. Antenna diversity system according to one of claims 1 to 19, **characterised in that** in the phase mode the phase-shifting element (33) is so set by the phase-control circuit that the signal-to-noise ratio is a maximum at all times.

## Revendications

1. Système de diversité d'antennes destiné à recevoir des signaux radiodiffusés en modulation de fréquence avec sommation des signaux d'antenne contrôlés en phase pour des véhicules avec un système à plusieurs antennes (21) avec au moins deux signaux de sortie d'antenne et un dispositif de réception (4) avec une entrée pour une première (31) voie de signal de réception et une entrée pour une deuxième (32) voie de signal de réception, la deuxième des deux voies de signal de réception contenant un dispositif de rotation de phase (33) qui est commandé par un dispositif de réglage de phase (34) et à la sortie duquel le signal de réception possède la même phase que dans la première voie de signal (31) et les deux signaux de réception (23a, 23b) sont additionnés en phase dans un élément de sommation (35) et le signal additionné (37) est connecté à la modulation de fréquence,
**caractérisé en ce que**
le système à plusieurs antennes (21) contient un dispositif de commutation logique réglable (11) dans lequel avec différentes positions de commutation du sélecteur (5) un signal de réception (23) différent quant à la diversité est connecté à chaque fois à au moins une des deux entrées du dispositif de réception (4) et le signal additionné (37) est connecté à un détecteur de défaillance (18), en vue d'une détection rapide d'un signal additionné perturbé par une excursion de fréquence perturbatrice, dont le signal de détection de défaillance (38) en présence d'une défaillance en réception commute le dispositif de commutation logique (11) dans une autre position de commutation et le dispositif de réglage de phase (34) possède une caractéristique de filtre passe-bas pour limiter la vitesse de réglage de la phase (figures 1 et 2).

2. Système de diversité d'antennes selon la revendication 1 **caractérisé en ce que** dans une mémoire du dispositif de commutation logique réglable (11) est enregistrée une liste avec une séquence prédéfinie avantageuse des positions de commutation des sélectionneurs (5) et/ou des inverseurs (8) de manière qu'en cas d'affichage d'une défaillance dans le signal additionné (37) un autre signal de réception (23) soit connecté, avec un temps de commutation minimal, en alternance d'abord à l'une des deux voies de signal (31, 32) et, en cas d'un affichage de défaillance consécutif, à l'autre des deux voies de signal (31, 32) (figure 3).

3. Système de diversité d'antennes selon la revendication 1, **caractérisé en ce qu'**est présent un processeur d'évaluation de signal (26) dans lequel sont contenus le détecteur de défaillance (18), un circuit logique (14) et un élément temporel (27) destiné à déterminer l'intervalle de temps TS entre des affichages de défaillance consécutifs, et **en ce que** le ou les intervalles de temps TS est ou sont comparé(s) dans le circuit logique (14) au temps de réponse TE du dispositif de réglage de phase (34) et si un temps de commutation TAPS convenablement prédéfini, qui est choisi inférieur ou en tous cas de peu supérieur au temps de réponse TE, n'est pas atteint une ou plusieurs fois, il est généré un ordre électrique de commutation P-S afin de passer du mode Phase au mode Exploration (figure 4).

4. Système de diversité d'antennes selon la revendication 3, **caractérisé en ce qu'**avec l'ordre électrique de commutation pour passer du mode Phase au mode Exploration est généré un signal de réglage de phase (25) dans le circuit logique (14) afin d'ouvrir le circuit de réglage de phase et de bloquer l'élément de rotation de phase (33) sur une valeur de phase constante dans le temps, et **en ce que**, en cas d'affichage d'une défaillance par le détecteur de défaillance (18), un autre signal de réception (23) est assigné à au moins une des deux voies de signaux (31, 32) via un signal d'adresse qui est généré par le circuit logique (14) et est envoyé au dispositif de commutation logique (11), et **en ce que** le système travaille en mode Exploration (figure 4).

5. Système de diversité d'antennes selon la revendication 4, **caractérisé en ce que** pour le fonctionnement en mode Exploration le circuit logique (14) connecte le même signal de réception (23) aux deux voies de signal (31, 32) et **en ce que** l'élément de rotation de phase (33) est réglé de manière fixe de sorte que les phases des signaux provenant des voies de signaux (31, 32) se superposent dans l'élément de sommation (35) (figure 4).

6. Système de diversité d'antennes selon la revendication 4 ou 5, **caractérisé en ce que**, pour le fonctionnement en mode Exploration, les intervalles de temps TS entre des affichages consécutifs de défaillance sont enregistrés en permanence dans le circuit logique (14) et affectés dans un tableau aux positions de commutation dans le système d'antennes avec dispositif de commutation (21), et **en ce que** ce tableau est trié selon les intervalles de temps TS décroissants afin d'actualiser en permanence une liste de priorités et, en cas d'affichage d'une défaillance par le détecteur de défaillance (18), le circuit logique (14) est commuté par le biais d'un signal d'adresse (39) sur un autre signal de réception (23) ayant la priorité la plus haute ou une priorité plus élevée.

7. Système de diversité d'antennes selon la revendication 6, **caractérisé en ce qu'**est présent un détecteur de voie de signal (15) à l'entrée duquel sont branchées les voies de signal 1 et 2 (31, 32) et la voie du signal additionné (43) et à la sortie duquel est branché le détecteur de défaillance (18), et **en ce que** dans le circuit logique (14) est présent un circuit d'horloge (29) qui, au bout d'un temps de vérification (30) nécessaire pour afficher des défaillances dans le détecteur de défaillance (18) connecte le détecteur de voie de signal (15) au détecteur de défaillance (18) afin d'effectuer une vérification dans chacune des voies de signaux (figure 5).

8. Système de diversité d'antennes selon la revendication 7, **caractérisé en ce que**, pour le fonctionnement en mode Exploration, il n'est connecté à l'élément de sommation (35) qu'un signal de réception (23) d'une des deux voies de signaux 1 et 2 (31, 32) (par exemple la voie de signal 1 (31)) en ouvrant un interrupteur de voie de signal (16) se trouvant devant l'élément de sommation (35) dans l'autre voie de signal (par exemple la voie de signal 2 (32)), et **en ce que** le circuit logique (14) en liaison avec le circuit d'horloge (29) est réalisé de manière que, dans des périodes d'horloge successives, d'un côté par la commutation du sélecteur de voie de signal (15) entre les deux voies de signaux 1 et 2 en conjonction à la connexion séquentielle de différents signaux de réception (par exemple signal de réception 23b) par le circuit logique (14) est présente et actualisée en permanence une liste de priorités en ce qui concerne l'unité de défaillance des signaux de réception (par exemple signal de réception 23b) et de manière que, d'un autre côté, en cas de réglage du sélecteur de voie de signal (15) sur la voie de signal additionné (43) et en cas d'une défaillance se produisant là, le circuit logique (14) connecte à l'élément de sommation (35) un signal de réception différent, connu d'après la liste de priorités présente dans le circuit logique (14) (par exemple le signal de réception 23a) et ayant la plus haute priorité ou une priorité plus élevée (figure 5).

9. Système de diversité d'antennes selon l'une quelconque des revendications 5 à 8, **caractérisé en ce que**, en cas d'un ou de plusieurs dépassements du temps de commutation prédéfini TASP au cours du mode Exploration, lequel temps est choisi au moins égal, mais de préférence bien supérieur au temps de réponse TE, il est généré un ordre électrique de commutation S-P du mode Exploration au mode Phase (figures 4 à 8).

10. Système de diversité d'antennes selon la revendication 9 en liaison avec la revendication 7, **caractérisé en ce que**, en cas d'apparition de l'ordre électrique de commutation S-P pour la commutation du mode Exploration au mode Phase via le signal de réglage de phase (25) dans le circuit logique (14) est réalisée la fermeture du circuit de réglage de phase, et **en ce que** l'interrupteur de voie de signal (16) est fermé par un signal du circuit logique (14), et **en ce qu'**un signal de réception avec la priorité la plus haute ou de priorité plus élevée est choisi dans la liste des priorités pour la voie de signal correspondante (par exemple voie de signal 2 (32)) par un signal d'adresse (39) et le réglage en résultant du dispositif de commutation (11).

11. Système de diversité d'antennes selon la revendication 9 en liaison avec la revendication 7, **caractérisé en ce que**, pour afficher des défaillances dans le signal additionné est branché en permanence un détecteur de défaillance avec un affichage extrêmement rapide (18a) et **en ce qu'**il y a un détecteur de défaillance avec une meilleure résolution (18b) qui est branché à un détecteur de voie de signal (15) synchronisé entre les deux voies de signaux 1 et 2 (31, 32) et à la sortie duquel les signaux d'affichage de défaillance (10) pour les deux voies de signaux 1 et 2 (31, 32) avec une bonne résolution de leur grandeur sont connectés en alternance au circuit logique (14) (figure 6).

12. Système de diversité d'antennes selon la revendication 11, **caractérisé en ce que**, à des fins de disponibilité permanente des signaux d'affichage de défaillance (10) pour les deux voies de signaux 1 et 2 (31, 32) est présent sur chaque voie un détecteur de défaillance avec une meilleure résolution (18b respectivement 18c) (figure 7).

13. Système de diversité d'antennes selon l'une quelconque des revendications 1 à 12, **caractérisé en ce que** le dispositif de réception (4) est réalisé en tant que récepteur à changement de fréquence et **en ce que** l'élément de rotation de phase (33), l'élément de sommation (35) et le détecteur de défaillance (18), respectivement les détecteurs de défaillance (18a, b, c) sont disposés dans le niveau de fréquence intermédiaire (figures 4 à 8).

14. Système de diversité d'antennes selon la revendication 13, **caractérisé en ce qu'**est présent un récepteur à changement de fréquence avec un convertisseur de fréquence I et un convertisseur de fréquence Q pour générer des composants en phase et en quadrature de phase des signaux de réception de fréquence intermédiaire (23) dans les voies de signaux 1 et 2 (31, 32) avec pondération différente des composants I-Q afin de régler la phase via un élément de rotation de phase (33) avec un dispositif de réglage de phase (34) ayant une caractéristique de filtre passe-bas et avec des éléments de sommation (35) pour regrouper les éléments I-Q afin de générer à chaque fois le signal de fréquence intermédiaire complet et modulé en fréquence en vue d'une détection rapide de défaillances dans le détecteur de défaillance (18) travaillant de manière analogue (figure 8).

15. Système de diversité d'antennes selon la revendication 14, **caractérisé en ce que** les composants I et Q à la sortie de la voie de signal additionné (43) sont numérisés et traités dans un processeur de traitement de signaux numériques DSP (41).

16. Système de diversité d'antennes selon la revendication 14, **caractérisé en ce que** les composants I et Q à la sortie des convertisseurs de fréquence I et Q (44a, 45a et 44b, 45b) sont numérisés dans un processeur de traitement de signaux numériques DSP (41) et que toutes les fonctions des revendications 1 à 13 sont réalisées par des processus de traitement numérique des signaux.

17. Système de diversité d'antennes selon l'une quelconque des revendications 1 à 14, **caractérisé en ce que** le temps de réponse du circuit de réglage pour une réaction rapide est choisi suffisamment petit, mais pas trop petit pour éviter une excursion de fréquence perturbatrice audible par l'opération de réglage, c'est-à-dire de préférence de l'ordre de grandeur de TE = 20 ms à 50 ms, et **en ce que** le temps de commutation prédéfini TASP dans le mode Exploration comme critère pour déclencher l'ordre électrique de commutation S-P du mode Exploration au mode Phase est réalisé de préférence égal à 5 à 10 fois TE, et **en ce que** le temps de commutation prédéfini TASP dans le mode Phase comme critère pour déclencher l'ordre électrique de commutation P-S du mode Phase au mode Exploration est également réalisé de préférence dans une plage de 5 à 10 fois TE.

18. Système de diversité d'antennes selon l'une quelconque des revendications 1 à 14, **caractérisé en ce que** le détecteur de défaillance avec un affichage extrêmement rapide (18a) est réalisé de sorte que l'affichage d'une défaillance ait lieu en tenant compte des temps de propagation des filtres en moins de 50 µs, en tous cas inférieur à 100 µs et **en ce que** le détecteur de défaillance avec une meilleure résolution (18b, 18c) est réalisé de sorte que l'affichage d'une défaillance ait lieu en tenant compte des temps de propagation des filtres entre 1 à 5 ms.

19. Système de diversité d'antennes selon la revendication 7 ou 18, **caractérisé en ce que** le temps de vérification (30) est choisi le plus court possible et ainsi de préférence entre une et deux fois le temps nécessaire à l'affichage d'une défaillance par le détecteur de défaillance avec un affichage extrêmement rapide (18a).

20. Système de diversité d'antennes selon l'une quelconque des revendications 1 à 19, **caractérisé en ce que** l'élément de rotation de phase (33) est réglé en mode Phase par le circuit de réglage de phase de sorte que le rapport signal sur perturbation soit maximal à tout moment.
